# EUROPÄISCHE PATENTSCHRIFT

(11) **EP 1 845 292 B1**
(45) Veröffentlichungstag und Bekanntmachung des Hinweises auf die Patenterteilung: **28.04.2010**
(21) Anmeldenummer: 07005735.1
(22) Anmeldetag: 21.03.2007
(51) Int. Cl.: F16K 3/02

(54) **Schieberanordnung**
Slide assembly
Système de coulisseaux

(30) Priorität: 13.04.2006 DE 102006017832
(43) Veröffentlichungstag der Anmeldung: 17.10.2007
(73) Patentinhaber: NEM Power-Systems, Niederlassung Deutschland der NEM B.V. Niederlande, 45665 Recklinghausen (DE)
(72) Erfinder: Erichsen, Volker von, 45659 Recklinghausen (DE)
(74) Vertreter: Radünz, Ingo

(56) Entgegenhaltungen:
- JP-A- 58 149 488
- US-A- 1 402 181
- US-A- 3 557 822
- US-A- 4 334 550
- US-A1- 2004 036 053

## Beschreibung

Die Erfindung betrifft eine Schieberanordnung zum Absperren eines zwischen einer Kohlemühle und Kohlenstaubbrennern angeordneten und ein Gas mit hohem Kohlenstaubanteil führenden Kanals mit den Merkmalen des Oberbegriffes des Anspruches 1.

In der von der Kohlemühle zu den Kohlenstaubbrennern führenden Austragsleitung wird ein Kohlenstaub-Gas-Gemisch mit einem sehr hohen Kohlenstaubgehalt von 1000 g/m³ oder mehr gefördert. Durch amtliche Vorschriften, z. B. die Unfall-Verhütungs-Vorschriften (UVV), sind aus Sicherheitsgründen in der Austragsleitung zwei nacheinander angeordnete Absperrungen vorgesehen, von denen eine meist als Schieber ausgeführt wird.

Bei derartigen Schiebern treten schwerwiegende Probleme auf. So sind alle Einbauten in dem Kanal und selbst die Kanal- oder Gehäusewände aufgrund der abrasiven Kohlepartikel starker Erosion ausgesetzt. Das Eindringen von Kohlenstaub selbst durch kleinste Spalte in die Haube einer Schieberanordnung lässt sich nicht verhindern. Aufgrund der sehr hohen Luftfeuchtigkeit des gasförmigen Fördermediums und verschiedenartiger chemischer Substanzen in dem Kohlenstaub lagern sich in die Haube eingetretene Partikel ab, backen zusammen und verursachen starke Korrosionen an allen Bauteilen oder erhöhen die Gefahr der Bildung von Glutnestern, wodurch sehr schnell eine komplette Funktionsunfähigkeit eintreten kann.

In der Praxis haben sich mehrere Konstruktionen entwickelt, um die oben genannten Probleme zu beherrschen. Dazu gehören:
- Steckscheiben, die in einen Spalt zwischen zwei Flansche geschoben werden, der durch das Zurückziehen eines Kompensators gebildet wird. Eine solche Konstruktion ist funktionell und preiswert, jedoch sehr arbeitsaufwendig und lässt sich nicht automatisieren.
- Schieber mit oder ohne Haube gibt es in den unterschiedlichen Variationen, die auch einen automatischen Betrieb zulassen. Es treten jedoch - besonders bei dieser Gruppe - über kurz oder lang die zu Beginn genannten Probleme auf.
- Eine weitere Gruppe bilden die so genannten Stopfbuchsenschieber. Hier wird eine ebene Platte durch eine rechteckige Stopfbuchse abgedichtet. Die unverrippte Schieberplatte muss hierbei wegen der Auslegung für den Explosionsdruck extrem stabil ausgeführt werden. Eine solche Konstruktion ist akzeptabel für kleinere Kanäle; bei größeren Kanälen treten erhebliche Dichtigkeitsprobleme durch die Ausdehnung der Platte auf, welche die Dichtung an den Stirnseiten der Platte beschädigt, was dann - wegen des hohen Überdruckes - zu erheblichen Verschmutzungen im Bereich der Mühlen führen kann.
- Schwenkklappen, die in eine seitliche Kanaltasche aufgeklappt werden, haben sich in der Praxis bewährt, weisen jedoch einige Nachteile auf. Zum einen ist der Schwenkflügel mit seinen Abdichtungen auch in der seitlichen Tasche dem kontinuierlichen Verschleiß ausgesetzt und dadurch häufig nicht mehr ausreichend dicht, wenn er plötzlich zum Einsatz kommen muss. Zum anderen erfordert eine solche Konstruktion einen großen Platzbedarf für den aufschwenkenden Flügel. Dieser Platz ist in der Praxis oberhalb der Kohlemühlen oft nicht vorhanden.
- Das Dokument US 2004/0036053 offenbart eine Schieberanordnung mit einer Schieberplatte und einem Verschlussdeckel.

Der Erfindung liegt die Aufgabe zugrunde, die gattungsgemäße Schieberanordnung so zu gestalten, dass sie dicht, robust, Verschleiß vermindernd und druckstoßfest ist.

Die Aufgabe wird bei einer gattungsgemäßen Schieberanordnung erfindungsgemäß durch die kennzeichnenden Merkmale des Anspruches 1 gelöst. Vorteilhafte Ausgestaltungen sind Gegenstand der Unteransprüche.

Der glatte Durchgang des Gehäuses ohne Führungsleisten oder Taschen dient der Verminderung des Verschleißes, da Einbauten, die dem Verschleiß durch das stark mit Kohlenstaub beladene Gas ausgesetzt sind und durch Verwirbelungen zu Anbackungen führen können, entfallen sind. Der Verschluss der Durchtrittsöffnung durch den selbstschließenden, selbst zuhaltenden und zur Ausfahrseite des Schiebers hin öffnenden Deckel mit umlaufender Dichtung schließt ein Eindringen von Staub und Feuchtigkeit in die Haube oder die Umgebung weitestgehend aus. Das Öffnen des Deckels durch die in das Gehäuse einfahrende Schieberplatte über das Kniehebelgestänge ermöglicht eine einfache und robuste Bauweise der Schieberanordnung. Der Verschluss aus Deckel und Kniehebelgestänge lässt sich ebenso wie das Gehäuse druckfest für 1 bar Verpuffungsdruck auslegen, was dem 10-fachen Betriebsdruck in dem Kanal entspricht.

Ein Ausführungsbeispiel der Erfindung ist in der Zeichnung dargestellt und wird im Folgenden näher erläutert. Es zeigen:
- Fig.1: eine Schieberanordnung in offener Position mit geschlossenem Verschlussdeckel nach der Erfindung;
- Fig.2: die Schieberanordnung nach Fig. 1 bei Beginn des Schließvorgangs, wobei der Verschlussdeckel leicht geöffnet ist;
- Fig.3: die Schieberanordnung nach Fig. 1 während des Einfahrens, wobei der Verschlussdeckel ganz geöffnet ist;
- Fig.4: die Schieberanordnung nach Fig. 1 in geschlossener Position;
- Fig.5: der Deckel und das Kniehebelgestänge im Ausschnitt nach Fig. 1 im vergrößerten Maßstab;
- Fig.6: die Reinigungsvorrichtung der Schieberanordnung im Ausschnitt nach Fig. 1 in vergrößertem Maßstab und
- Fig.7: die Haube der Schieberanordnung nach Fig. 1 im getrennten Zustand.

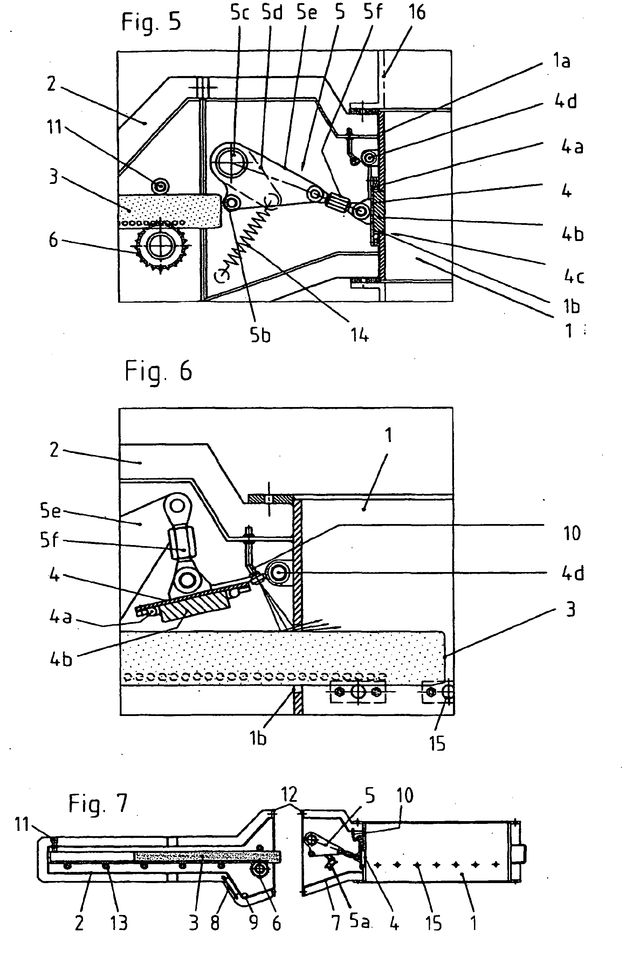

In einen vorzugsweise rechteckigen Kanal 16, der die Austragsleitung zwischen einer Kohlemühle und Kohlenstaubbrennern darstellt, ist ein Gehäuse 1 einer Schieberanordnung eingesetzt. Eine Wandung 1a des Gehäuses 1 ist aus einem dicken, verschleißfesten Material gefertigt. (Fig. 5)

In der Wandung 1a des Gehäuses 1 ist eine Durchtrittsöffnung 1b vorgesehen, die durch einen Verschlussdeckel 4 verschließbar ist. Auf den Verschlussdeckel 4 ist zum Ausfüllen der Durchtrittsöffnung 1b ein Blech 4b aufgesetzt, das aus dem gleichen verschleißfesten Material gefertigt ist wie die Wandung 1a des Gehäuses 1. Das aufgesetzte Blech 4b schießt auf der Innenseite des Gehäuses 1 mit dessen Wandung 1a ab. Auf diese Weise wird ein glatter Durchgang des Gehäuses 1 erzeugt. Rund um das aufgesetzte Blech ist der Verschlussdeckel 4 mit einer umlaufenden Dichtung 4a versehen, die den Spalt zwischen dem Verschlussdeckel 4 und der Wandung 1a des Gehäuses 1 ausfüllt und ein Austreten von Staub verhindert. Lediglich in einem kleinen Restspalt 4c können sich Staubpartikel ablagern.

Auf der dem Kanal 16 abgewandten Seite ist das Gehäuse 1 zur Aufnahme einer Schieberplatte 3 und einer Verriegelung des Verschlussdeckels 4 mit einer Haube 2 oder einer Stahlkonstruktion verbunden. Innerhalb der Haube 2 oder Stahlkonstruktion ist der Verschlussdeckel 4 oberhalb seines Schwerpunktes in einem an der Rückseite der Wandung 1a des Gehäuses 1 angebrachten Scharnier 4d pendelnd aufgehängt, so dass der Verschlussdeckel 4 unter seinem Eigengewicht die Durchtrittsöffnung 1b verschließt. Der Schließeffekt wird durch eine außenliegende Schließfeder 14 oder ein anderes Schließelement, wie ein Schließgewicht oder eine Gasfeder unterstützt, die über ein Kniehebelgestänge 5d, 5e auf den Verschlussdeckel 4 wirkt.

Wie in Fig. 5 gezeigt ist, besteht die Deckel-Schließvorrichtung 5 aus einer beidseitig außen an der Haube 2 oder Stahlkonstruktion gelagerten Welle 5c mit den Außenhebeln 5d, den Innenhebeln 5e und den Schubstangen 5 f. Über die Außenhebel 5d wird über die an der Haube 2 oder Stahlkonstruktion festgemachten und unter Zugspannung stehenden Federn ein Schließmoment erzeugt, das über die Innenhebel 5e und die Schubstangen 5f auf den Verschlussdeckel 4 übertragen wird. Das Kniehebelgestänge 5d, 5e geht dabei in Strecklage und dadurch in Selbsthaltung, wodurch der Verschlussdeckel 4 fest angepresst wird. In dieser Stellung des Kniehebelgestänges 5d, 5e kann ein etwa in dem Kanal 16 entstehender Verpuffungsdruck ohne Problem aufgefangen werden. Je nach Größe der Schieberanordnung können die Schließelemente - Federn, Gewichte oder Gasfedern - einseitig oder beidseitig angeordnet sein.

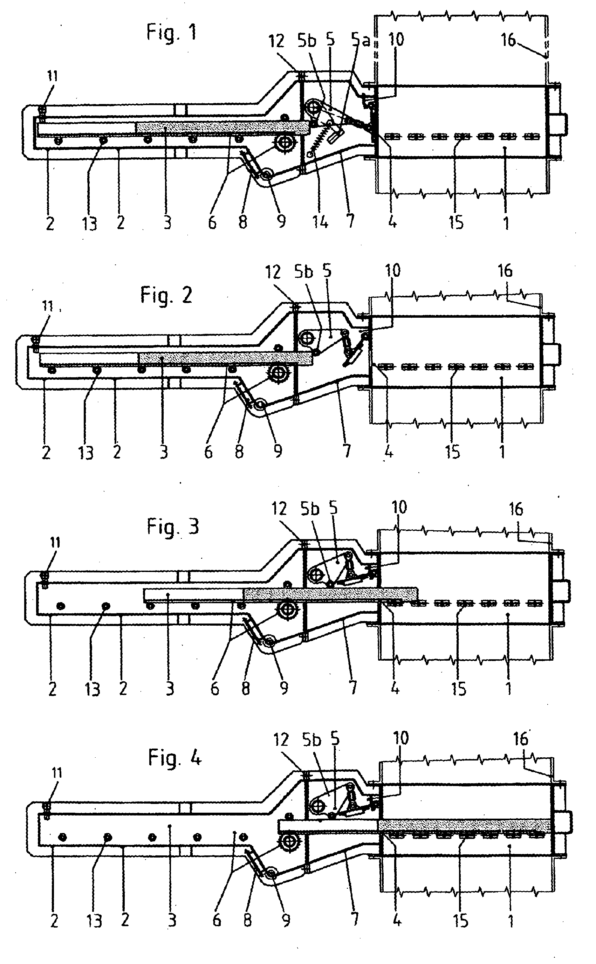

In der offenen Position der Schieberanordnung nach Fig. 1 befindet sich die Schieberplatte 3 in der Haube 2 oder Stahlkonstruktion. Die Schieberplatte 3 ist innerhalb der Haube 2 oder Stahlkonstruktion auf wartungsfreien Führungsrollen 13 abgestützt und durch einen Triebstock 6 angetrieben. Der Triebstock 6 befindet sich an der Unterseite der Schieberplatte 3, wodurch keine funktionsbehindernden Ablagerungen möglich sind. Bei schmalen Schieberplatten 3 wird der Triebstock 6 einfach ausgeführt und in der Mitte angeordnet, bei größeren und breiteren Schieberplatten 3 beidseitig.

Die Triebstockwelle wird in der Standardausführung über ein selbsthemmendes Getriebe mit Handrad betätigt. Eine Variante ist die manuelle Fernbetätigung über Kettenrad und Kette oder über eine Kardangelenkwelle und Handrad. Natürlich ist auch ein vollautomatischer Betrieb mit elektrischen Motoren möglich. Die Verwendung von pneumatischen oder hydraulischen Motoren erlaubt sogar eine Notfunktion bei Energieausfall über Luftbehälter bzw. Blasenspeicher.

In einer Standardausführung weist die Schieberplatte 3 eine flächenäquivalente Dichtigkeit von 98-99% auf, wohingegen Sonderausführungen mit zusätzlichen Dichtlamellen Werte bis zu 99,95% erreichen.

Durch den Triebstock 6 wird die Schieberplatte 3 aus der Ruhestellung in das Gehäuse 1 zur Absperrung des Kanals 16 gefahren. Innerhalb des Gehäuses 1 ist die Schieberplatte 3 durch austauschbare, hochverschleißfeste Führungsbolzen 15 geführt. Die Position der Schieberplatte 3 wird durch induktive Endschalter 11 signalisiert, die direkt von der ausfahrenden Schieberplatte 3 betätigt werden.

In der Ebene der Schieberplatte 3 ist an dem zweiten Hebel 5e des Kniehebelgestänges 5d, 5e zwischen dem Gelenk und dem Anlenkpunkt an den Verschlussdeckel 4 eine Rolle 5b angebracht. In der Offenstellung der Schieberanordnung bei zurückgezogener Schieberplatte 3 und geschlossenem Verschlussdeckel 4 steht die Rolle 5b des zweiten Hebels 5e vor der Stirnseite der Schieberplatte 3 (Fig. 1, Fig. 5).

Bei einer Betätigung des Triebstockes 6 drückt die ausfahrende Schieberplatte 3 gegen die Rolle 5b und hebt das Kniehebelgestänge 5d, 5e an, wodurch gleichzeitig die Schließfeder 14 oder andere Schließelemente vorgespannt werden. Mit dem durch das Ausfahren der Schieberplatte 3 bewirkten Anheben des Kniehebelgestänges 5d, 5e wird der Verschlussdeckel 4 zunächst leicht (Fig. 2) und dann vollständig geöffnet (Fig. 3) und die Durchtrittsöffnung 1b freigegeben. Die Schieberplatte 3 wird so weit ausgefahren, bis sie das in den Kanal 16 eingesetzte Gehäuse 1 vollständig verschließt (Fig.4).

Oberhalb der Durchtrittsöffnung 1b kann sich im Bereich des Scharniers 4d des Verschlussdeckels 4 eine Reihe von Pressluftdüsen 10 befinden, deren Strahlen gegen die Schieberplatte 3 gerichtet sind (Fig. 6). Diese Strahlen blasen Kohlenstaub, der eventuell auf die ein- oder ausfahrende Schieberplatte 3 herabfällt, in das Gehäuse 1 zurück. Die Pressluftdüsen 10 werden nur während des Verfahrens der Schieberplatte 3 geöffnet.

Die Haube 2 besitzt unterhalb Durchtrittsöffnung 1b eine trichterförmige Erweiterung 7, die durch einen Wartungs- und Inspektionsdeckel 8 verschlossen ist. Die trichterförmige Erweiterung 7 ermöglicht zum einen - auch bei laufendem Betrieb - eine Besichtigung des Verschlussdeckels 4, des Kniehebelgestänges 5d, 5e und des Triebstockes 6. Zum anderen ist die trichterförmige Erweiterung 7 mit beidseitigen Öffnungen 9 versehen, die eine manuelle oder automatische Feuchtigkeits-Drainage und/oder Reinigung erlauben. (Fig. 1)

Die Haube 2 ist auf der dem Kniehebelgestänge 5d, 5e abgewandten Seite mit einer senkrecht oder quer zur Schieberplatte 3 verlaufenden Teilfuge 12 versehen, wodurch ein mit dem Gehäuse 1 verschweißter und ein angeschraubter Haubenteil gebildet ist.

Hier besteht die Möglichkeit, nach Jahren eine intensive Wartung sehr einfach durchzuführen, indem man den angeschraubten Haubenteil komplett mit Schieberplatte 3 und Triebstock 6 abnehmen und auf Normalniveau inspizieren kann. Eine beidseitige Blockiereinrichtung 5a an dem Kniehebelgestänge 5d, 5e des Verschlussdeckels 4 erlaubt solche Arbeiten sogar bei laufendem Betrieb der Mühle. (Fig. 7)

## Patentansprüche

1. Schieberanordnung zum Absperren eines zwischen einer Kohlemühle und Kohlenstaubbrennern angeordneten und ein Gas mit hohem Kohlenstaubanteil führenden Kanals (16), wobei die Schieberanordnung ein in die Wand des Kanals (16) einsetztbares Gehäuse (1) und eine seitlich mit dem Gehäuse (1) verbundene Haube (2) oder Stahlkonstruktion umfasst und wobei in einer der Haube (2) oder Stahlkonstruktion zugewandten Wandung (1a) des Gehäuses (1) eine Durchtrittsöffnung für eine Schieberplatte (3) vorgesehen ist, **dadurch gekennzeichnet, dass** die Durchtrittöffnung (1b) bis auf einen engen Restspalt (4c) durch einen Verschlussdeckel (4) verschließbar ist, dass der Verschlussdeckel (4) mit einer umlaufenden Dichtung (4a) und einem aufgesetzten Verschleißblech (4b) versehen ist, dass die umlaufende Dichtung (4a) an der rückwärtigen Seite der Wandung (1a) anliegt und dass das aufgesetzte Verschleißblech (4b) mit der Innenseite der Wandung (1a) bündig abschließt und einen glatten Durchgang bildet.

2. Schieberanordnung nach Anspruch 1, **dadurch gekennzeichnet, dass** an den Verschlussdeckel (4) ein gestrecktes, selbsthaltendes Kniehebelgestänge (5d, 5e) mittels außenliegenden Schließelementen, wie Federn (14) oder Schließgewichten angreift und dass der Verschlussdeckel (4)durch die Schließelemente in Schließ-Position gehalten ist und dort in Selbsthaltung verbleibt.

3. Schieberanordnung nach Anspruch 1 und 2, **dadurch gekennzeichnet, dass** die Schieberplatte (3) mit einem Antrieb versehen ist, dass an dem Kniehebelgestänge (5d, 5e) in der Ebene der Schieberplatte (3) eine oder mehrere Rollen (5b) angebracht sind, dass die Schieberplatte (3) beim Einfahren in das Gehäuse (1) mit den Rollen (5b) in Eingriff steht und den Verschlussdeckel (4) über das Kniehebelgestänge (5d, 5e) in Offenstellung bringt und dabei gleichzeitig die Schließelemente (14) vorspannt.

4. Schieberanordnung nach einem der Ansprüche 1 bis 3, **dadurch gekennzeichnet, dass** die Haube (2) mit einer trichterförmigen Erweiterung (7) versehen ist und dass an dem tiefsten Punkt der Erweiterung (7) eine oder mehrere Öffnungen (9) zur Drainage und/oder Reinigung angebracht sind.

5. Schieberanordnung nach Anspruch 4, **dadurch gekennzeichnet, dass** die trichterförmige Erweiterung (7) mit einem Wartungs- und Inspektionsdeckel (8) versehen ist.

6. Schieberanordnung Anspruch 1, **dadurch gekennzeichnet, dass** im Bereich der Durchtrittsöffnung (1b) in einer Höhe oberhalb der Schieberplatte (3) Reinigungsdüsen (10) angeordnet sind und dass austretende Strahlen der Reinigungsdüsen gegen die in das Gehäuse (1) ein- oder ausfahrende Schieberplatte (3) gerichtet sind.

7. Schieberanordnung nach Anspruch 1, **dadurch gekennzeichnet, dass** die Schieberplatte (3) innerhalb der Haube (2) oder Stahlkonstruktion auf Führungsrollen (13) und innerhalb des Gehäuses (1) auf auswechselbaren Führungsbolzen (15) abgestützt ist.

## Claims

1. Gate valve assembly for shutting off duct (16) arranged between a coal mill and pulverized-coal burners and carrying a gas with a high pulverized-coal content, wherein the gate valve assembly comprises a casing (1) insertable into the wall of said duct (16), and a bonnet (2) laterally connected with said casing (1), or a steel structure, and wherein in a wall (1a) of said casing (1) facing said bonnet (2) or the steel structure a penetration hole (1b) is provided for a disk (3), **characterized in that** said penetration hole (1b) is closable by a cover (4) but for a narrow residual gap (4c), that said cover (4) is provided with a circumferential gasket (4a) and a set-on wear plate (4b), that said circumferential gasket (4a) rests at the rear side of said wall (1a) and that said set-on wear plate (4b) ends flush with the inside of said wall (1a) and forms a smooth passage.

2. Gate valve assembly according to claim 1, **characterized in that** a straight, self-supporting toggle linkage (5d, 5e) engages in said cover (4) by means of outside closing elements such as springs (14) or closing weights and that said cover (4) is held in the closed position by the closing elements and remains there in self-locking.

3. Gate valve assembly according to claims 1 and 2, **characterized in that** said disk (3) is provided with a drive, that one or more rollers (5b) are arranged at said toggle linkage (5d, 5e) in the plane of said disk (3), that said disk (3) when advancing into casing (1) is engaged with said rollers (5b) and brings said cover (4) through said toggle linkage (5d, 5e) into the open position and at the same time prestresses said closing elements (14).

4. Gate valve assembly according to one of claims 1 to 3, **characterized in that** said bonnet (2) is provided with a hopper-shaped enlargement (7) and that at the lowest point of said enlargement (7) are arranged one or more openings (9) for drainage and/or cleaning.

5. Gate valve assembly according to claim 4, **characterized in that** said hopper-shaped enlargement (7) is provided with a maintenance and inspection cover (8).

6. Gate valve assembly according to claim 1, **characterized in that** in the area of said penetration hole (1b) cleaning nozzles (10) are arranged at a level above said disk (3) and that jets emerging from said cleaning nozzles are directed against said disk (3) advancing into and withdrawing from said casing (1).

7. Gate valve assembly according to claim 1, **characterized in that** said disk (3) inside said bonnet (2) or the steel structure rests on guide rollers (13) and inside said casing (1) on replaceable guide bolts (15).

## Revendications

1. Agencement de robinet-vanne pour la fermeture d'un conduit (16) disposé entre un moulin à charbon et des brûleurs à poussière de charbon et véhiculant un gaz présentant une fraction élevée de poussière de charbon, l'agencement de robinet-vanne comprenant un boîtier (1) pouvant être inséré dans la paroi du conduit (16) et un capot (2) ou une construction en acier relié latéralement au boîtier (1) et une ouverture de passage pour une plaque de robinet-vanne (3) étant prévue dans une paroi (1a), associée au capot (2) ou à la construction en acier, du boîtier (1), **caractérisé en ce que** l'ouverture de passage (1b) peut être fermée par un couvercle de fermeture (4) à l'exception d'une fente résiduelle (4c) étroite, **en ce que** le couvercle de fermeture (4) est doté d'un joint (4a) périphérique et d'une tôle d'usure (4b) rapportée dessus, **en ce que** le joint (4a) périphérique s'applique sur le côté arrière de la paroi (1a) et **en ce que** la tôle d'usure (4b) rapportée dessus ferme au niveau du côté intérieur de la paroi (1a) et forme un passage lisse.

2. Agencement de robinet-vanne selon la revendication 1, **caractérisé en ce qu'**une tringle à levier coudé (5d, 5e) étirée et à auto-maintien s'applique sur le couvercle de fermeture (4) au moyen d'éléments de fermeture extérieurs, tels que ressorts (14) ou poids de fermeture, et **en ce que** le couvercle de fermeture (4) est maintenu par les éléments de fermeture en position de fermeture et y reste en auto-maintien.

3. Agencement de robinet-vanne selon les revendications 1 et 2, **caractérisé en ce que** la plaque de robinet-vanne (3) est dotée d'un entraînement, **en ce qu'**un ou plusieurs galets (5b) sont placés sur la tringle à levier coudé (5d, 5e) dans le plan de la plaque de robinet-vanne (3), **en ce que** la plaque de robinet-vanne (3) est en prise avec les galets (5b) lors de l'entrée dans le boîtier (1) et amène le couvercle de fermeture (4) en position ouverte au moyen de la tringle à levier coudé (5d, 5e) tout en pré-tendant les éléments de fermeture (14).

4. Agencement de robinet-vanne selon l'une quelconque des revendications 1 à 3, **caractérisé en ce que** le capot (2) est doté d'une extension (7) en forme d'entonnoir et **en ce qu'**une ou plusieurs ouvertures (9) pour le drainage et/ou le nettoyage sont placées au point le plus bas de l'extension (7).

5. Agencement de robinet-vanne selon la revendication 4, **caractérisé en ce que** l'extension (7) en forme d'entonnoir est dotée d'un couvercle de maintenance et d'inspection (8).

6. Agencement de robinet-vanne selon la revendication 1, **caractérisé en ce que** des buses de nettoyage (10) sont disposées dans la zone de l'ouverture de passage (1b) à une hauteur au-dessus de la plaque de robinet-vanne (3) et **en ce que** des jets sortant des buses de nettoyage sont dirigés vers la plaque de robinet-vanne (3) entrant ou sortant dans le boîtier (1).

7. Agencement de robinet-vanne selon la revendication 1, **caractérisé en ce que** la plaque de robinet-vanne (3) est soutenue à l'intérieur du capot (2) ou de la construction en acier sur des galets de guidage (13) et à l'intérieur du boîtier (1) sur des boulons de guidage (15) remplaçables.
